# EUROPEAN PATENT SPECIFICATION

(11) **EP 3 464 126 B1**
(45) Date of publication and mention of the grant of the patent: **11.03.2026**
(21) Application number: 17728107.8
(22) Date of filing: 29.05.2017
(51) Int. Cl.: B65G 1/00, B65H 15/02

(54) **PILE PREPARATION UNIT WITH PALLET EXCHANGE MODULE**
EINHEIT ZUR HERSTELLUNG EINES STAPELS MIT EINEM PALETTENAUSTAUSCHMODUL
UNITÉ DE PRÉPARATION DE PILES POURVUE D'UN MODULE D'ÉCHANGE DE PALETTES

(30) Priority: 30.05.2016 DK 201670378
(43) Date of publication of application: 10.04.2019
(73) Proprietor: Schur Automation A/S, 8700 Horsens (DK)
(72) Inventor: ANDERSSON, Jonas, 575 36 Eksjö (SE); GRANDIN, Niklas, 571 72 Ormaryd (SE); GUSTAVSSON, Stefan, 578 33 Aneby (SE)
(74) Representative: Patrade A/S
(86) International application number: PCT/EP2017/062911
(87) International publication number: WO 2017/207499

(56) References cited:
- EP-A1- 0 683 126
- EP-A1- 2 508 449
- JP-A- 2010 013 230
- JP-A- H06 336 336
- US-A- 3 190 461

## Description

### Field of the Invention

The present invention relates to a pile preparation unit for changing a first pallet with a second pallet, the pallets for supporting a pile of sheets with a first end and second end where the pallet has a support side, supporting the pile of sheets at the first end and an opposite base side. The pile preparation unit comprises a rotation unit configured with an infeed opening for receiving a pallet with a pile of sheets. The rotation unit is configured with a rotating structure to rotate a lift unit about a rotational axis. The lift unit may be configured with a lift structure fixed to the rotating structure and has a lift plate movable along the lift structure to engage with the second end of the pile of sheets and to move and position the pile of sheets transverse, relative to the rotational axis, providing a portal for changing a pallet.

Also disclosed is sheet storage unit or waste sheet unit for operatively communicating with a pile sheet remover system in a PPU. The sheet storage unit may be configured to operatively communicating one or more sheets from a release position in the PPU to a sheet storage plate.

### Background of the Invention

Preparation of a pile of sheets for processing, such as paper sheets for printing, is still a complex task that requires manual intervention at different stages of the preparation. Sheets of different types may require individual handling or attention.

Typically a pile of sheets is provided on a disposable pallet and needs to be moved to a pallet for processing. Thus, changing a pallet of a first type to a pallet of a second type is a challenge.

At the same time handling of the pile of sheets, sheets and pallets in the cause of pile preparation pose challenges.

Manual handling poses challenges regarding quality aspects and or hygiene. At the same time removing excess sheets is pose ergonomic problems. Often excess sheets of paper is abolished or in cases binned for recycling.

EP 0683126 A1 discloses a pile preparation unit, in particular, the document discloses a pile turner for automatically exchanging a transport pallet of a sheet pile by pivoting the sheet pile, where the transport pallet resting freely on the sheet pile is grasped by a handling device, lifted from the sheet pile, moved and deposited at a pallet collection point.

### Object of the Invention

It is an object of the present invention to overcome one or more of the before mentioned limitations.

### Description of the Invention

The invention is defined in claim 1. An object of the invention is achieved by a pile preparation unit for changing a first pallet with a second pallet, the pallets for supporting a pile of sheets with a first end and second end where the first pallet has a support side, supporting the pile of sheets at the first end and an opposite base side.

The pile preparation unit comprises a rotation unit configured with an infeed opening for receiving the first pallet with a pile of sheets. The rotation unit is configured with a rotating structure to rotate a lift unit about a rotational axis.

The lift unit may be configured with a lift structure fixed to the rotating structure and has a lift plate movable along the lift structure to engage with the second end of the pile of sheets and to move and position the pile of sheets transverse, relative to the rotational axis, providing a portal for changing a pallet.

The pallet preparation unit comprises a pallet change module comprising a pallet portal with movable pallet engagement means for engaging with the first and/or second pallet, for extraction from and/or insertion into the portal formed in an upper section of the rotation unit, when a lift plate is in the lower section of the rotation unit.

The pile preparation unit further comprises a pallet loading unit arranged on the opposite side of the pallet change module and with a pallet loading arm fixed to the rotation unit. The pallet loading arm is configured to engage with and support the second pallet during rotation of the rotating structure and to release the second pallet on the second pallet engagement means.

By a portal is understood a space or volume created where further actions or preparations can be performed. In particular this may involve actions or preparations where the pile of sheets being is to be prepared on a free end of the pile. Such actions may be a removal or extraction of a pallet, the insertion or delivery of a pallet, or both. Actions may also be a removal of sheets from the established free end of the pile.

The pallet preparation unit may thus receive a pile of sheets and exchange one pallet with another pallet in an automated fashion.

The rotation unit may comprise a unit frame with a rotation unit frame cross section. The rotation unit may be configured to rotate a conveyor about the feed direction.

The conveyor may be configured to transport a pallet with a pile of sheets from the infeed side in the feed direction to a pile preparation position.

The pallet loading unit is configured to engage with and support a second pallet during rotation of the rotating unit and to release the second pallet on the second pallet engagement means.

The pallet loading unit may be configured with a pallet loading arm fixed to the rotating structure of the rotation unit and for engaging with a second pallet so that when the rotating unit rotates the pile of sheets the loading arm transports the second pallet, and turns it upside-down for delivery of the second pallet on the second pallet engagement means in the correct orientation for immediate insertion into the portal.

The pallet change module comprises a first pallet portal with movable first pallet engagement means arranged to extend to an extraction position in the rotation unit.

The pallet change module comprises a second pallet portal with movable second pallet engagement means arranged to extend to a delivery position in the rotation unit, where the first and second pallet portals are vertically separated.

The lift is configured to move and position the lift plate for the pallet end of the pile of sheets to be positioned at the respective extraction position and delivery position.

In an aspect the pallet change module is arranged on the side of the rotation unit and to extend the pallet engagement means, the first or second or both pallet engagement means into the rotation unit from a transverse direction to the rotational axis.

The direction of insertion may be essentially horizontal and the pallet change module may be arranged on the side of the rotation unit relative to the infeed on a front. The pallet change module may comprise guides and supports as required to achieve a horizontal movement of a pallet. Likewise the engagement means are complementary in shape to the pallets. The engagement means may be adjustable to enable a fit to pallets of different types. A person skilled in the art will appreciate a need to perform adjustments and balance or dimension the construction as required for a pallet of a specific type to be moved in the pallet portal. Counterweights may be required. Similarly actuators may be required to adjust the position and the placement of the engagement means and thus the positioning of the pallet. The drive system may be a belt drive type of system that drives the movement.

In one embodiment the first and second pallet engagement means may be identical.

In an aspect the pallet change module may be operatively connected to a pallet receiving unit arranged below the pallet portal and with a pallet receiving lift operatively communicating the movable pallet engagement means for a release of an extracted pallet onto a set of pallets.

The pallet receiving lift may transport a pallet to a deposit of pallets. The lift may comprise a conveyor for horizontal shift or transport of a pile of accumulated pallets.

In an aspect the pallet change module may operatively be connected to a pile sheet remover system configured to remove sheets from a pile of sheets from the rotating unit.

The pile sheet remover system (PSR) may be arranged on one of the pallet portal systems. Advantageously PSR may be arranged on the first pallet portal in connection with the first pallet engagement means. In this way allowing for the first pallet to be removed and while preparing the second pallet to be inserted, the PSR may prepare the pile of sheets for insertion of the second pallet by removing sheets from the established free end during operation.

The PSR may comprise a sheet removing unit having a support frame supporting a moving frame, configured for a linear movement in an attack direction towards the side and the free end of the pile of sheets.

The moving frame may have a side support plate with a side support face arranged to face and apply to the side of the pile of sheets.

The PSR may have a grab plate arranged with a grab face essentially perpendicular to the side support face and extending beyond the side support face in the attack direction, configured with a grab actuator for a grab movement towards the free end of the pile of sheets.

The PSR may have one or more attack knives arranged below the grab plate to face the side of the pile of sheets, and configured with one or more attack actuators for a first attack movement in the attack direction for insertion of the one or more attack knives between a pair of sheets, i.e. between two adjacent sheets.

In an aspect the pile sheet remover system may be arranged on the pallet portal with movable pallet engagement means arranged to extend to a delivery position in the rotation unit, and with the pile sheet remover system arranged with an additional movement to attack a pile of sheets in the rotation unit.

In an aspect the pallet change module may be operatively connected to a sheet storage unit operatively communicating the pile sheet remover system arranged on the pallet portal, where the sheet storage unit is arranged below the pallet portal and with a sheet receiving lift operatively communicating one or more sheets from a release position in the pallet portal to a sheet storage plate. Optionally the release may be to a container. In an aspect the sheet storage unit may comprise a sheet storage magazine with multiple sheet storage plates at distinct storage positions, and where the sheet receiving lift is configured to communicate with sheet storage plates between the distinct storage positions and a release position of the pile sheet remover system.

In an aspect the sheet storage unit comprises multiple sheet receiving lifts distributed along and optionally below the pallet portal.

In an aspect the pile preparation unit may comprise a first sheet receiving lift configured to communicate or transport a pallet chosen from a first storage magazine. There may be a second sheet receiving lift configured to communicate or transport a pallet chosen from a second storage magazine. The first and second sheet receiving lifts are located under the pallet portal and the first and second sheet magazines are located adjacent to the respective first and second sheet receiving lifts. There may be numerous additional sheet receiving lifts and sheet magazines.

The pile preparation unit may comprise a controller or a control system. The control system may be configured to execute actions of the before mentioned structural elements. The actions required to receive a pile of sheets on a first pallet, to rotate the pile of sheets, to extract the first pallet, to remove sheets, to insert the second pallet before rotating the pile of sheets before ejecting the prepared pile of sheets standing on the second pallet may be stored. In particular such process or set of actions may be stored as a recipe. There may be stored multiple recipes according to different types of pallets, piles, sheets etc. The control system may be configured so that an experience operator is enabled to fine tune or adjust a recipe whereas a less experienced operator may only execute actions in a recipe.

In an aspect the features disclosed may be operatively connected to perform the following to prepare a pile of sheets for processing including exchanging a first pallet with a second pallet.

A pile of sheets on a first pallet moves along a conveyor towards a pile preparation unit. The pile of sheets is positioned inside a rotation unit. Meanwhile a sheet storage plate from a bottommost storage position of a first storage magazine moves towards a first sheet receiving lift on a conveyor. A first sheet receiving lift lifts the sheet storage plate upwards towards the pallet change module. The lift plate of the lift unit moves downwards towards the second end of the pile of sheets.

An edge support unit moves in to support the side of pile of sheets. The edge support unit comprises of a blower unit and a pile support unit. The blower unit connects with the side of the pile of sheets and the pile support unit connects with the edge of the pile of sheets, while clamping a support rod down unto the support side of the first pallet. A pallet loading unit engages with a second pallet using a pallet loading arms. The rotation unit begins to rotate the pile of sheets around a rotation axis.

The blower unit and the pile of sheets are tilted. A vibration module and the blowing intensity are adjusted according to the material of the pile of sheets. The pile of sheets is turned upside down by the rotation unit during vibration and blowing. The second pallet is feed to the second pallet engagement means.

The lift unit lowers the second lift plate. This places the first pallet in the first pallet portal, while clearing the second pallet portal for the second pallet. The second pallet engagement means inserts the second pallet into the rotation unit. The first pallet engagement means engages with the first pallet. An extraction of the first pallet is performed by the first pallet engagement means. The first pallet engagement means positions the first pallet directly above pallet receiving unit. The pallet receiving unit is lifted up to engage with the first pallet and the first pallet is stacked on the pallet stack.

A pile sheet remover system engages with the first end of the pile of sheets. During the engagement the side support face connects with the side of the pile of sheets. Attack knives in the pile sheet remover attack in an attack direction, which perpendicular to the side of pile of sheets. A grab plate moves downwards towards the first end of the pile of sheets and the grab face engages with the uppermost sheet of the pile of sheets. Thus, the pile sheet remover grabs one or more sheets from the first end of the pile of sheets. The pile sheet remover extracts the grabbed sheets and pulls them towards a sheet storage plate.

The pile sheet remover with the one or more sheets is positioned directly above the sheet storage plate. The one or more sheets are then release onto the sheet storage plate. The sheet storage plate with the one or more sheets is placed on the uppermost storage position of the first storage magazine.

The rotation unit begins to rotate the pile of sheets. The rotation unit rotates the pile of sheets until complete at the original orientation and the pile of sheets is moved along a conveyor. The pile of sheets is back to its starting position and with the first end supported by a second pallet.

In an aspect there may be a sheet storage unit for operatively communicating with a pile sheet remover system in a PPU. The sheet storage unit may be configured to operatively communicating one or more sheets from a release position in the PPU to a sheet storage plate.

The sheet storage unit may be implemented as a waste sheet unit for sorting waste sheets.

In an aspect the sheet storage unit comprises a sheet storage magazine with multiple sheet storage plates at distinct storage positions. There may be a sheet receiving lift that is configured to communicate with sheet storage plates between the distinct storage positions and a release position in the PPU.

The sheet storage unit may comprise multiple sheet receiving lifts arranged to be distributed along and optionally below multiple release positions in the PPU.

In an embodiment the sheet receiving lift may be configured to communicate with a pallet chosen from a first sheet storage magazine and a second sheet receiving lift configured to communicate with a pallet chosen from a second sheet storage magazine.

There may be numerous additional magazines and lifts.

The invention can advantageously be combined with one or more of the following five embodiments and the following five embodiments can be combined with each other.

An embodiment not according to the claimed invention may be a conveyor with a belt for transporting an object between a first end and a second end of the conveyor. The conveyor may have a first belt drive transmission at the first end and a second belt drive transmission at the second end. The drive transmission may be configured as freewheel-types in respective directions.

The conveyor may have an intermediate transmission system arranged between the first end and the second end and having a first communication with the first belt drive transmission and having a second communication with the second belt drive transmission.

The conveyor may have a drive system in communication with a drive shaft in the intermediate transmission system, and may be configured to turn the drive shaft bidirectional in a first drive direction and a second drive direction.

The conveyor may be configured with the drive shaft having an intermediate communication with the first communication through a first intermediate transmission and the second communication through a second intermediate transmission.

The disclosed conveyor is compact and low weight, which allows for installation with in industrial process equipment. The conveyor may be adapted to be rotated in a pile preparation unit. The conveyor is reversible, and has a single centre positioned drive system. The conveyor may transport heavy loads and with an equal load and equal torque in the forward and reverse directions. The conveyor eliminates or counteracts any "push" forces on the belt.

In an aspect, the first intermediate transmission is configured for engagement and force transmission at a first engagement position in the first drive direction and a second engagement position in the second drive direction and in-between having a first path of un-engagement.

In an aspect, the second intermediate transmission is configured for engagement and force transmission at a first engagement position in the first drive direction and a second engagement position in the second drive direction and in-between having a second path of un-engagement.

In an aspect, the intermediate communication is arranged so that for the first drive direction, the first intermediate transmission is enabled for engagement at the first engagement position whilst the second intermediate transmission is in the second path of un-engagement. For the same aspect and for the second drive direction, the second intermediate transmission is enabled for engagement at the second engagement position whilst the first intermediate transmission is in the first path of un-engagement.

Thereby is achieved that the conveyor for the first drive direction, engages the first belt drive transmission for a first pull of the belt towards the first end whilst freewheeling the second belt drive transmission. For the second drive direction it is achieved that the second belt drive transmission engages for a second pull of the belt towards the second end whilst free-wheeling the first belt drive transmission.

Such conveyor will pull towards the respective first and second end whilst releasing tension in respective opposite ends. By pull is understood that traction power or a traction force is applied from the respective first or second end of the conveyor. This will allow the conveyor to transport heavy objects back and forth without building-up tension. A further advantage is that tensions are released during use situations of "asymmetric load" where a heavy object is transported in one direction, substantially of-floaded and then reversed as a light object. A further advantage is that the configuration results in a flat structure of the conveyor in a direction transverse to the face of the belt for engaging with the object.

In an aspect the intermediate communication comprises an intermediate chain engaging with a drive cogwheel on the driveshaft, a first intermediate drive cogwheel on the first intermediate transmission and a second intermediate drive cogwheel on the second intermediate transmission. In an aspect the first and second communications comprise respective first and second communication chains engaging respective first and second belt cogwheels in the respective first and second belt drive transmissions with respective first and second communication cogwheels in the respective first and second intermediate transmissions. In an aspect the respective first and second intermediate transmissions each has a respective first and second intermediate drive cogwheel and a respective first and second communication cogwheel sharing respective common first and second intermediate shafts. Furthermore, the respective first and second intermediate transmission may be configured with engagement means to transmit force at least from the respective first and second drive intermediate cogwheels to the respective first and second communication cogwheels.

Hereby is achieved that the intermediate transmission can apply a pull or traction force to the respective first and second ends of the conveyor. The engagement or appliance of a force then depends on the direction of rotation so that a pull or traction force is from one end of a conveyor for one direction of rotation of the drive and that a pull or traction force is from the other end of the conveyor for an opposite direction of rotation of the drive.

An embodiment not according to the claimed invention may be a pile preparation unit (PPU) for preparing a pile of sheets. The pile of sheets has a first end, which first end is optionally standing on a pallet, and opposite a free second end, a front edge side and a side edge side.

The PPU comprises a rotation base configured for standing on a floor and for supporting a rotation unit, configured with an infeed side for receiving a pile of sheets in a feed direction. The pile of sheets may optionally be on a pallet. The rotation unit may have a rotation unit frame with a rotation unit frame cross section. The rotation unit may be configured with an edge side support unit, configured with an edge side support face to support an edge side of the pile of sheets when the pile of sheets is in a rotated position to lean on the edge side support face. The rotation unit may have a lift unit configured to engage a lift plate to the free second end of the pile of sheets in the pile preparation position and to lift a pile of sheets.

In an aspect of the pile preparation unit (PPU), the rotation unit frame comprises two guides shifted in the feed direction relative to each other and each fixed to the rotation base and guiding a belt driven by a rotation unit drive system in the rotation base. The belt may be a timing belt. The belt may be a chain.

It is understood that the pile of sheets does not form part of the invention. However for clarity and understanding, the pile of sheets is an object to which the pile preparation unit is directed to. A person skilled in the art will thus appreciate modifications of the PPU according to variations in a size or shape of a pile of sheets.

Thus the PPU provides an effective and automated apparatus for preparing a pile of sheets for processing. The disclosed PPU may handle piles of sheets of a multiplicity of types of pile-shapes and -sizes as well as a multiplicity of sheet types and weights. The disclosed PPU saves time, the PPU allows for a quick setup for a new material in a pile of sheets. Piles prepared by the PPU will be more identical and PPU will provide a substantially constant throughput. The PPU may be fully integrated in an ERP system.

The rotation unit may rotate about a rotational axis, which axis may the feed direction. The rotation unit may be configured to rotate a conveyor about the feed direction. The conveyor may be configured to transport a pallet with a pile of sheets from the infeed side in the feed direction to a pile preparation position. In an aspect the belts encircle the conveyor.

An embodiment not according to the claimed invention may be related to changing the location of a pallet from one side of a pile of sheets to the opposite side of the pile of sheets, the following aspects of the invention is disclosed. The changing of the location of a pallet may also involve the exchange of a first pallet with a second pallet. The first pallet may be a disposable pallet such as a EUR-pallet and the second pallet may be a process pallet. A process pallet may be a type of pallet that is used in a specific clean environment.

In an aspect the rotating unit comprises a first conveyor configured to rotate with the rotating structure and the lift unit comprises a second conveyor configured as a second lift plate. This allows automatic handling and to extract existing process pallet and reuse it and apply on same pile of sheets after turning the pile 180 degrees.

In an aspect the lift unit comprises a first lift plate and a second lift plate, each configured to move and position in the lift structure to engage to the respective first end and second end of the pile of sheets.

Thereby providing a plate or face which position can be changed to support or carry a pile of sheets at the bottom and/or be removed from the top to generate the portal or space or volume required.

In an aspect the pile preparation unit may be for exchanging a first pallet with a second pallet. The pallet change module may comprise a first pallet portal with movable first pallet engagement means arranged to extend to an extraction position in the rotation unit. The pallet change module may comprise a second pallet portal with movable second pallet engagement means, arranged to extend to a delivery position in the rotation unit the first and second pallet portal vertically separated.

The lift unit may be configured to move and position the lift plate for the pallet end of the pile of sheets to be positioned at the respective extraction position and delivery position.

An embodiment not according to the claimed invention may be a pile preparation unit for changing a first pallet with a second pallet, the pallets for supporting a pile of sheets with a first end and second end where the pallet has a support side, supporting the pile of sheets at the first end and an opposite base side.

The pile preparation unit may comprise a rotation unit configured with an infeed opening for receiving a pallet with a pile of sheets. The rotation unit is configured with a rotating structure to rotate a lift unit about a rotational axis.

The lift unit may be configured with a lift structure fixed to the rotating structure and has a lift plate movable along the lift structure to engage with the second end of the pile of sheets and to move and position the pile of sheets transverse, relative to the rotational axis, providing a portal for changing a pallet.

The pallet preparation unit may comprise a pallet change module comprising a pallet portal with movable pallet engagement means for engaging with a pallet, for extraction from and/or insertion into the portal formed in an upper section of the rotation unit, when the lift plate is in the lower section of the rotation unit.

By a portal is understood a space or volume created where further actions or preparations can be performed. In particular this may involve actions or preparations where the pile of sheets being is to be prepared on a free end of the pile. Such actions may be a removal or extraction of a pallet, the insertion or delivery of a pallet, or both. Actions may also be a removal of sheets from the established free end of the pile.

The pallet preparation unit may thus receive a pile of sheets and exchange one pallet with another pallet in an automated fashion. The rotation unit may comprise a unit frame with a rotation unit frame cross section. The rotation unit may be configured to rotate a conveyor about the feed direction. The conveyor may be configured to transport a pallet with a pile of sheets from the infeed side in the feed direction to a pile preparation position.

In an aspect the pallet change module comprises a first pallet portal with movable first pallet engagement means arranged to extend to an extraction position in the rotation unit.

The pallet change module may comprise a second pallet portal with movable second pallet engagement means arranged to extend to a delivery position in the rotation unit, where the first and second pallet portals are vertically separated.

The lift may be configured to move and position the lift plate for the pallet end of the pile of sheets to be positioned at the respective extraction position and delivery position.

In an aspect the pallet change module is arranged on the side of the rotation unit and to extend the pallet engagement means, the first or second or both pallet engagement means into the rotation unit from a transverse direction to the rotational axis. The direction of insertion may be essentially horizontal and the pallet change module may be arranged on the side of the rotation unit relative to the infeed on a front. The pallet change module may comprise guides and supports as required to achieve a horizontal movement of a pallet. Likewise the engagement means are complementary in shape to the pallets. The engagement means may be adjustable to enable a fit to pallets of different types. A person skilled in the art will appreciate a need to perform adjustments and balance or dimension the construction as required for a pallet of a specific type to be moved in the pallet portal. Counterweights may be required. Similarly actuators may be required to adjust the position and the placement of the engagement means and thus the positioning of the pallet. The drive system may be a belt drive type of system that drives the movement. In one embodiment the first and second pallet engagement means may be identical.

In an aspect the pile preparation unit may further comprise a pallet loading unit arranged on the opposite side of the pallet change module and with a pallet loading arm fixed to the rotation unit. The pallet loading arm is configured to engage with and support a second pallet during rotation of the rotating unit and to release the second pallet on the second pallet engagement means. The pallet loading unit is configured to engage with and support a second pallet during rotation of the rotating unit and to release the second pallet on the second pallet engagement means. The pallet loading unit may be configured with a pallet loading arm fixed to the rotating structure of the rotation unit and for engaging with a second pallet so that when the rotating unit rotates the pile of sheets the loading arm transports the second pallet, and turns it upside-down for delivery of the second pallet on the second pallet engagement means in the correct orientation for immediate insertion into the portal.

An embodiment not according to the claimed invention may be a pile sheet remover system (PSR) for preparing a pile of sheets with a height, a free end, and a side of sheet edges for processing in a pile preparation unit (PPU).

The PSR may comprise a sheet removing unit having a support frame supporting a moving frame, configured for a linear movement in an attack direction towards the side and the free end of the pile of sheets.

The moving frame may have a side support plate with a side support face arranged to face and apply to the side of the pile of sheets.

The PSR may have a grab plate arranged with a grab face essentially perpendicular to the side support face and extending beyond the side support face in the attack direction, configured with a grab actuator for a grab movement towards the free end of the pile of sheets.

The PSR may have one or more attack knives arranged below the grab plate to face the side of the pile of sheets, and configured with one or more attack actuators for a first attack movement in the attack direction for insertion of the one or more attack knives between a pair of sheets, i.e. between two adjacent sheets

It is thereby achieved that top sheets can be removed automatically. Furthermore the arrangement can be adjusted according to different characteristics of a pile of sheets. A further advantage is that the system can be arranged in a pile preparation unit, which in other aspects such are turning the pile, airing the pile or changing of a pallet or the location of the pallet.

In an aspect there is a first attack knife for a first attack movement and a second attack knife for a second attack movement. The first attack knife may be a smaller knife with a blade in the attack direction. The first knife may be a razor blade type of knife. The second attack knife may be larger than the first knife and with a sharp and point type of form in the attack direction. The knife may also be a stylus type of shape.

In an aspect one or more second attack knives are configured with one or more transverse actuators for a movement transverse to the line of attack direction and parallel to the sheet edges. The knives used for the transverse movement may be second attack knives. There may be one knife for a transverse movement from a center area to a periphery. There may be another knife for a transverse movement from the center area to a periphery on the other side. There may be two second attack knives, each being configured with individual transverse actuators.

This effectively separates sheets to be removed from the remaining sheets. A further advantage is that the transverse movement leaves the knives in a favorable position when the actual removal takes place and thus decreases the risk of destroying the sheets.

In an aspect one or more first attack knives are configured with one or more edge lift actuators for a lift movement transverse to the line-of-attack direction and perpendicular to the sheet edges. The lift movement lifts the edge of the sheets upwardly and thus makes it possible for a further insertion into the sheets. Advantageously the movement is performed swiftly to increase the separation of sheets. The lift actuators may be pneumatic actuators. The actuators may be adjustable in action length or speed.

In an aspect one or more attack knives are configured for a second attack movement extending the first attack movement in the attack direction for further insertion of the one or more attack knives between the pair of sheets. This second movement may be provided by the same actuator used for the first movement. The second movement may also be provided by additional actuators. Thus there may be a first set of actuators and a second set of actuators.

### Description of the Drawing

Embodiments of the invention will be described in the figures, whereon:
- Figs. 1 to 2: illustrate a pile preparation unit for changing a first pallet with a second pallet;
- Figs. 3 to 4: illustrate a pallet change module operatively arranged with a rotation unit;
- Fig. 5 to 6: illustrates aspects of a pallet loading unit for loading a pallet of a second type;
- Figs. 7 to 8: illustrate pallet engagement means for different types of pallets;
- Figs. 9 to 12: illustrate operation of a rotation unit and a pallet change module with a first and second pallet portal;
- Figs. 13 to 18: illustrate interaction of the pallet change module and a pallet receiving unit;
- Figs. 19 to 24: illustrate aspects of a sheet storage unit; and
- Figs. 25 to 29: illustrate aspects of a pile sheet remover unit.

### Detailed Description of the Invention

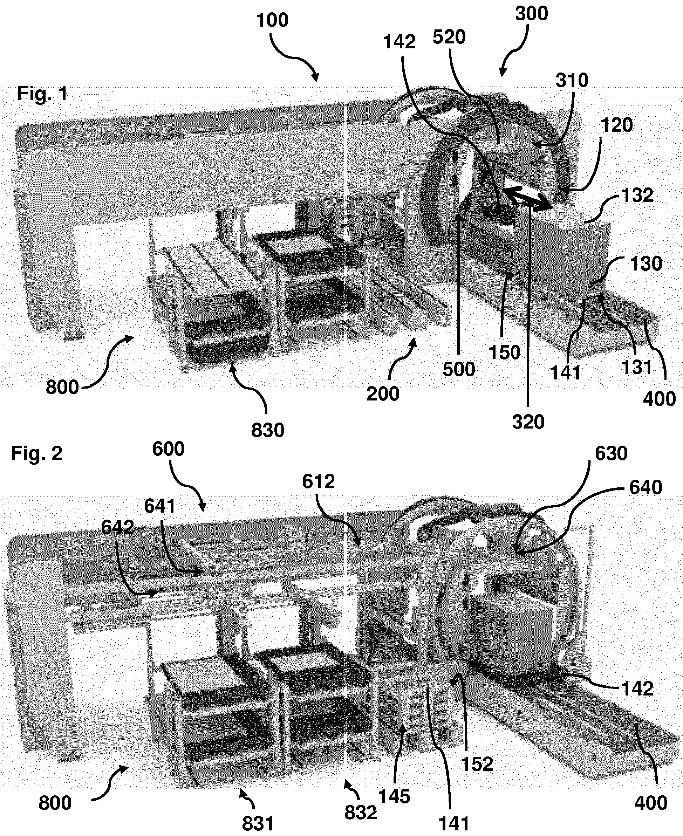

Figure 1 and 2 illustrate the same pile preparation unit 100, the difference being that figure 2 gives a better view of the insides of the pile preparation unit 100.

The two figures disclose a pile preparation unit 100 for changing a first pallet 141 with a second pallet 142.

The purpose of the pallets 141, 142 are supporting a pile of sheets 130 with a first end 131 and a second end 132.

The pallet 140 has a support side 150, which supports a pile of sheets 130 at the first end 131 and an opposite base side 152.

The pile preparation unit 100 has a rotation unit 300 configured with an infeed opening 120 for receiving a pallet 140 with a pile of sheets 130. The rotation unit 300 has a rotating structure 310 to rotate a lift unit 500 about a rotational axis 320.

The lift unit 500 is configured with a lift structure 510 fixed to the rotating structure 310. The lift unit 500 has a lift plate 520 movable along the lift structure 510 to engage with the second end 132 of the pile of sheets 130 and to move and position the pile of sheets 130 transverse, relative to the rotational axis 320 providing a portal 630 for changing a pallet 140.

The pile preparation unit 100 has a pallet change module 600 comprising a pallet portal 640 with movable pallet engagement means 610 for engaging with a pallet 140 for extraction 650 from and/or insertion 652 into the portal 630 formed in a upper section of the rotation unit 300 when the lift plate 520 is in the lower section of the rotation unit 300.

The pallet change module 600 has a first pallet portal 641 with movable first pallet engagement means 611 arranged to extend to an extraction position 660 in the rotation unit 300.

The pallet change module 600 has a second pallet portal 642 with movable second pallet engagement means 612 arranged to extend to a delivery position 662 in the rotation unit 300 where the first and second pallet portal 641, 642 are vertically separated.

The pallet change module 600 and the lift unit 500 work together. The lift unit 500 will move and position the first end 131 of the pile of sheets 130 to either an extraction position 660 or a delivery position 662.

The pile preparation unit 100 has the pallet change module 600 on the side of the rotation unit 300 and thus, the pallet engagement means 610 can extend into the rotation unit 300 from a transverse direction to the rotational axis 320.

The pile preparation unit 100 has a pallet loading unit 620 arranged on the opposite side of the pallet change module 600. The pallet loading unit 620 has a pallet loading arm 622 fixed to the rotation unit 300. The pallet loading arm 622 is configured to engage with and support a second pallet 142 during rotation of the rotating unit 300 and is configured to release the second pallet 142 on the second pallet engagement means 612.

The pallet change module 600 is operatively connected to a sheet storage unit 800 operatively communicating a pile sheet remover system 700. The pile sheet remover system 700 is not shown in figure 1 and 2.

The sheet storage unit 800 is arranged below the pallet portal 640 and with a sheet receiving lift 810 operatively communicating one or more sheets 133 from a release position 664 in the pallet portal 640 to a sheet storage plate 820.

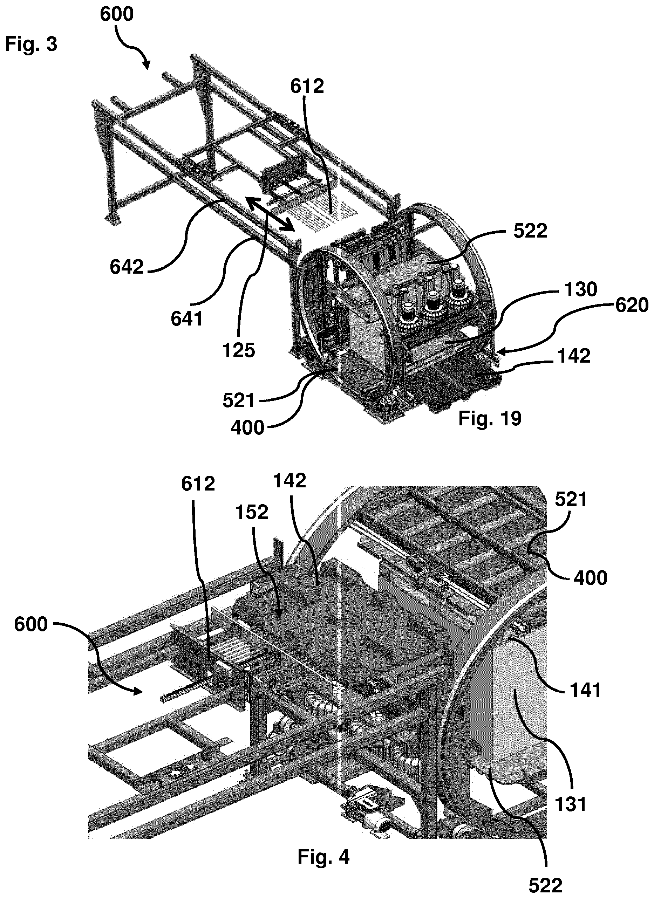

Figure 3 to 4 illustrate a pallet change module 600 operatively arranged with a rotation unit 300.

In figure 3 the pile of sheets 130 has not yet been rotated around the rotation axis 320. The second pallet 142 has therefore not been fed to the second pallet engagement means 612.

In figure 4 the pile of sheets 130 has been rotated by the rotation unit 300 and the second pallet 142 has been fed to the second pallet engagement means 612. The pallet module 600 can then change the first pallet 141 with the second pallet 142 by pallet engagement means 610.

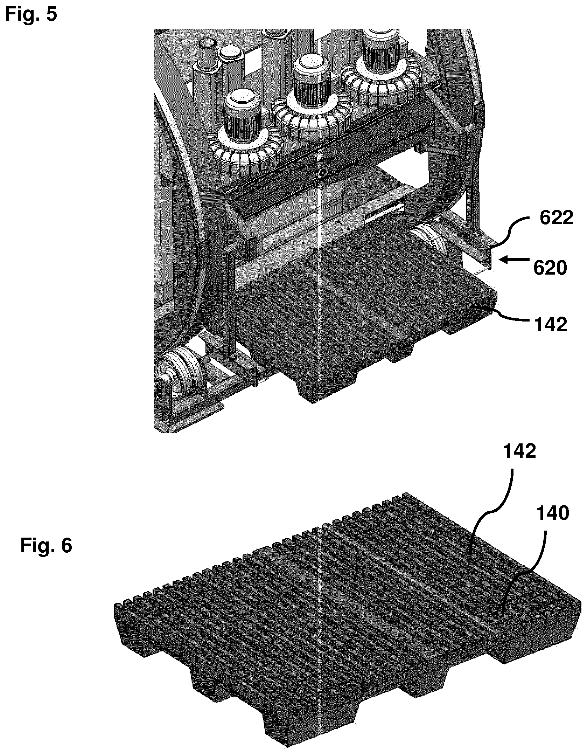

Figure 5 and 6 illustrate aspects of a pallet loading unit 620 for loading a pallet of a second type.

Figure 5 illustrate a close-up of a pallet loading unit 620 with a pallet loading arm 622 and a second pallet 142.

Figure 6 illustrates a pallet 140.

If the pallet is fed to the second pallet engagement means 612 by the loading unit 620 the pallet 140 is called the second pallet 142.

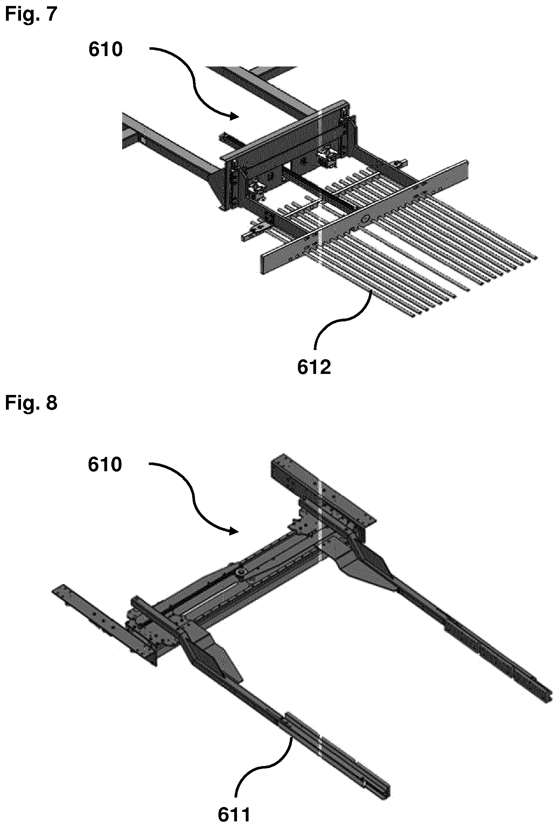

Figure 7 and 8 illustrate pallet engagement means 610 for different types of pallets 140. Figure 7 discloses second pallet engagement means 612. Figure 8 discloses first pallet engagement means 611.

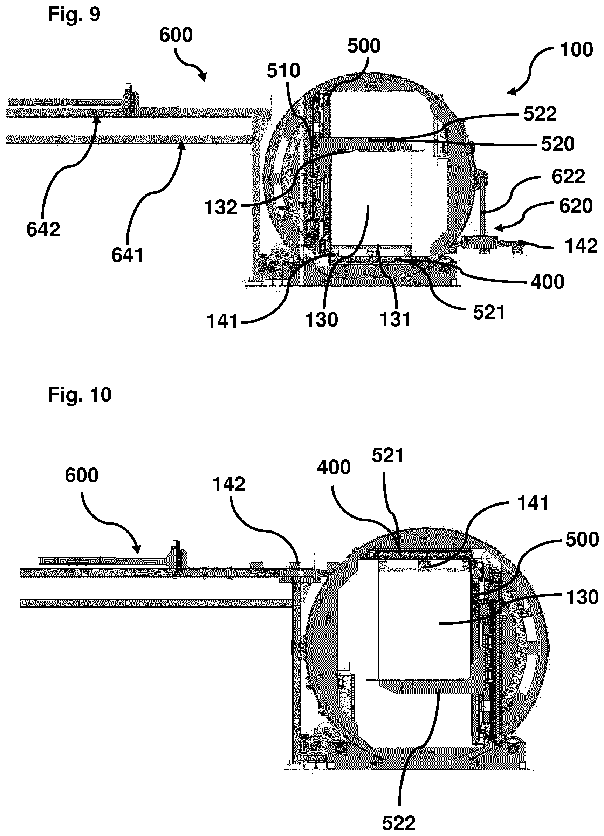

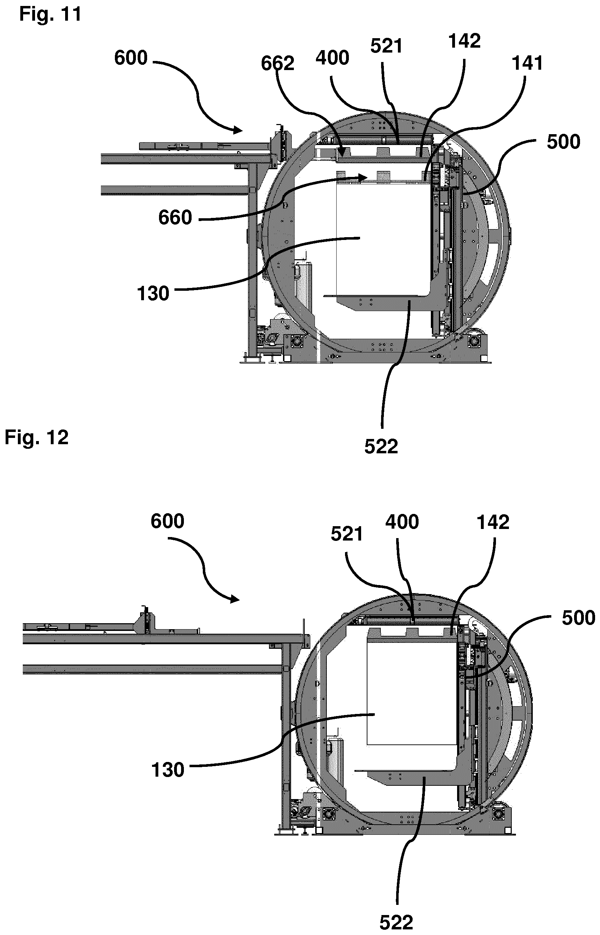

Figure 9 and 12 illustrate operation of a rotation unit 300 and a pallet change module 600 with a first and second pallet portal 641,642.

Figure 9 discloses a pile preparation unit 100 for changing a pallet 140 support of a pile of sheets 130. The pile of sheets has a first end 131 and second end 132 and the pallet 140 has a support side 150, supporting the pile of sheets 130 at the first end 131.

The pile preparation unit 100 has a pallet change module 600. The pallet change module 600 has a first pallet portal 641 with movable first pallet engagement means 611 arranged to extend to an extraction position 660 in the rotation unit 300 and a second pallet portal 642 with movable second pallet engagement means 612 arranged to extend to a delivery position 662 in the rotation unit 300. The first and second pallet portals 641, 642 are vertically separated. The extraction position 660 and delivery position 662 are not shown in figure 9.

In figure 10 the pile of sheets 130 has been rotated by the rotation unit 300 and the second pallet 142 has been fed to the second pallet engagement means 612.

Between figure 10 and 11 the lift unit 500 has moved the pile of sheets 130 a bit downwards by lowering of the second lift plate 522. Thus the first pallet 141 is in the first pallet portal 641 and the first pallet 141 is therefore at the extraction position 660.

The second pallet 142 is placed at the second pallet engagement means 612, which is vertically at the same height as the second pallet portal 642; thus, the second pallet is at the delivery position 662.

In figure 11 the second engagement means 612 move the second pallet 142 into the second pallet portal 642 to deliver the second pallet 142.

Likewise the first engagement means 611 move in to extract the first pallet 141. This action is not shown.

In figure 12 the first pallet 141 has been removed by the first pallet engagement means 611.

The rotation unit 300 may rotate the pile of sheets 130 around a rotational axis 320. The pile of sheets 130 would then be in the initial position shown in figure 9, but with a different pallet 140.

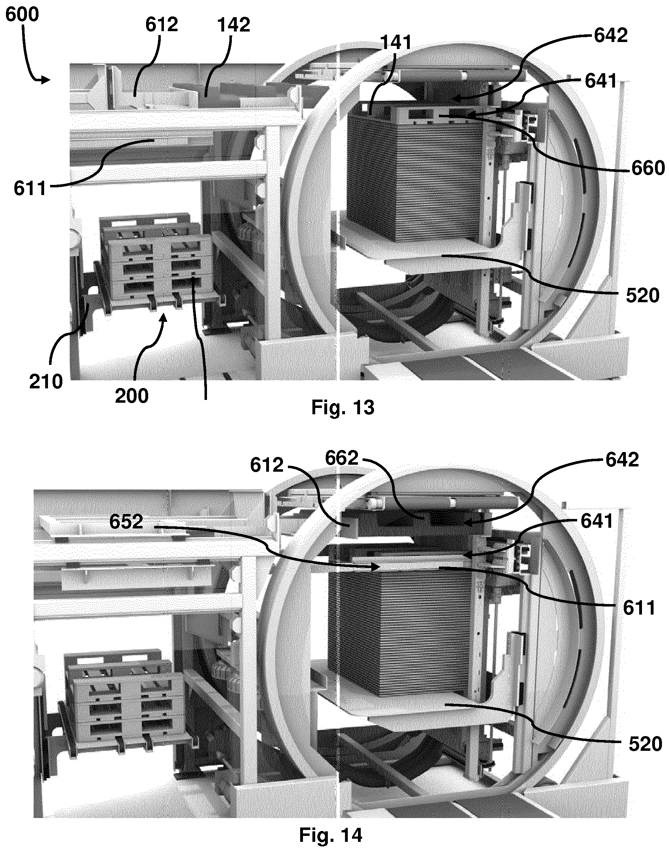

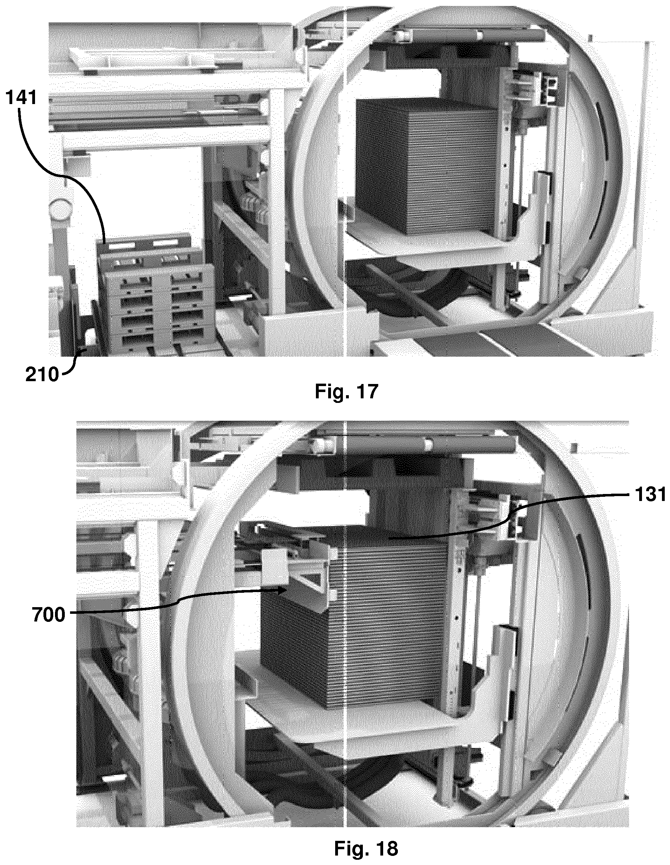

Figure 13 and 18 illustrate interaction of the pallet change module 600 and a pallet receiving unit 200. The figure series show the same actions as figure 9 to 12 but with a pallet receiving unit 200.

In figure 13 the second pallet engagement means 612 have been fed a second pallet 142 and are ready for insertion 652 of the second pallet 142 into the delivery position 662. Meanwhile, the first pallet 141 has been placed in the extraction position 660. The pallet receiving unit 200 and the pallet receiving lift 210 are idle.

In figure 14 the second pallet 142 is in the delivery position 660. First pallet engagement means 611 has engaged with the first pallet 141 and the first pallet 141 is therefore ready for extraction 650. The pallet receiving unit 200 and the pallet receiving lift 210 are idle.

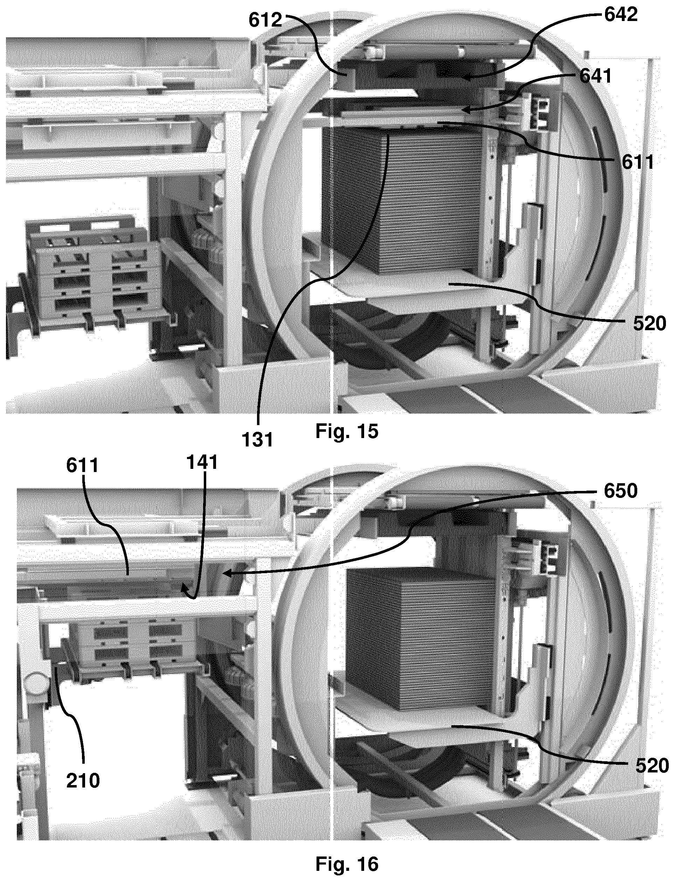

In figure 15 the lift unit 500 moves the lift plate 520 a bit downwards, thus releasing the first end 131 of the pile of sheets 130 from the support side 150 of the first pallet 141. The pallet receiving unit 200 and the pallet receiving lift 210 are idle.

In figure 16 the pallet receiving lift 210 moves upwards to receive the first pallet 141 from the first pallet engagement means 611 and the first pallet 141 is placed onto the pallet receiving unit 200.

In figure 17 the pallet receiving lift 210 moves downwards and the pallets 140 may be removed by a conveyor 400 or a truck or by other means. Thus, pallets 140 of the same type are stacked together.

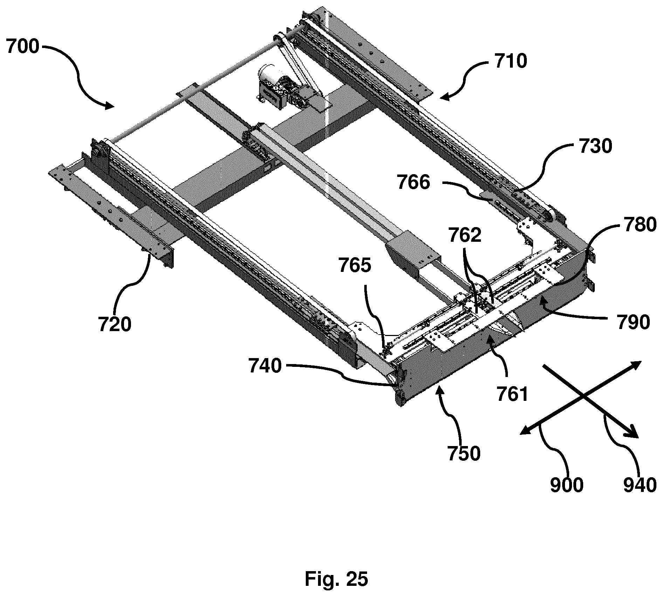

In figure 18 the pile sheet remover system 700 engages with the pile of sheets 130. However, this is shown in greater detail in figures 25 to 29. Removal of one or more sheets 133 may be necessary as the extraction 650 of the first pallet 141 may displace one or more sheets 133.

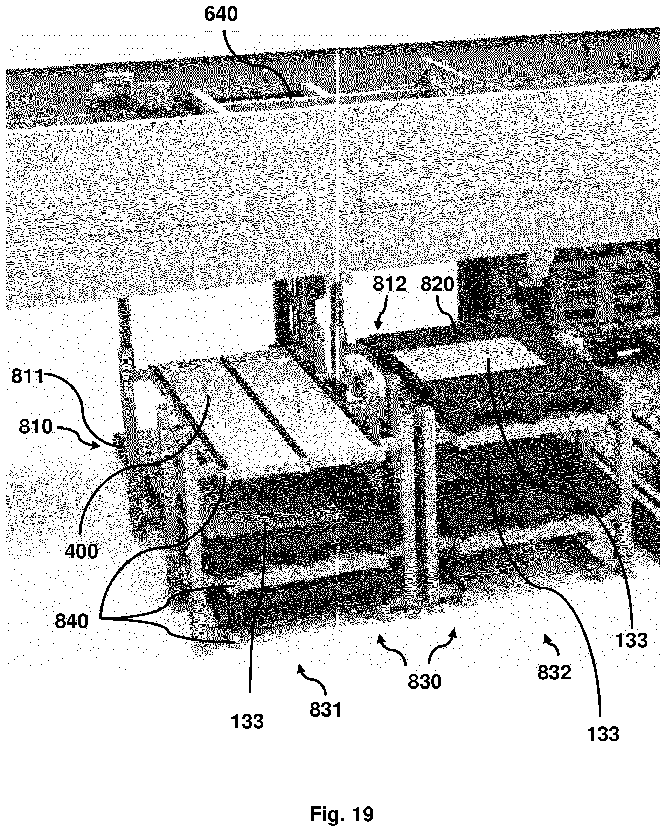

Figure 19 to 24 illustrate how one or more sheets 133 removed by the pile sheet remover system 700 are placed at a storage position 840.

Figure 19 illustrates a sheet storage unit 800 comprising two sheet storage magazines 830; a first sheet storage magazine 831 and a second sheet storage magazine 832. In the figure each sheet storage magazine 830 has three storage positions 840. The storage positions 840 have a conveyor 400. Some of the storage positions 840 have a sheet storage plate 820. Some of the sheet storage plates 820 have one or more sheets 133. The sheets 133 on the different sheet storage plates 820 have different geometries.

In another embodiment the sheet storage magazine 830 may have one or more storage positions 840.

The sheet storage magazine 830 may have a sheet storage plate 820 and one or more sheets 133 may be placed on the sheet storage plate 820.

In another embodiment the sheet storage unit 800 may have one or more sheet storage magazines 830.

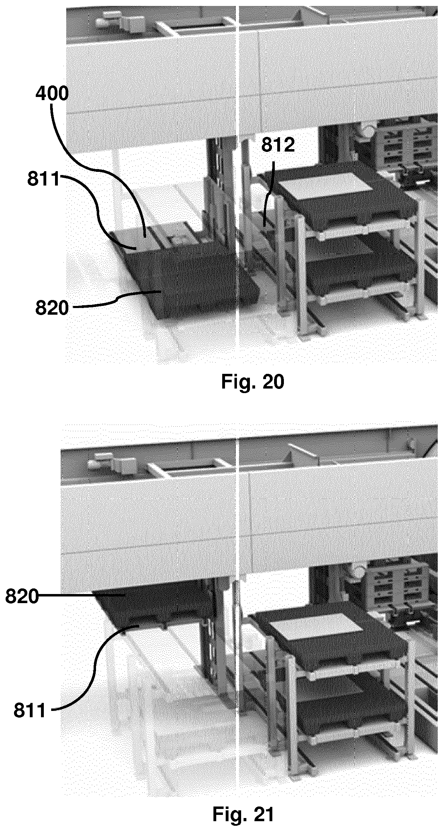

In figure 20 a sheet storage plate 820 is moved by a conveyor 400 onto the first sheet receiving lift 811.

In figure 21 the first sheet receiving lift 811 with the sheet storage plate 820 is lifted upwards towards the pallet change module 600.

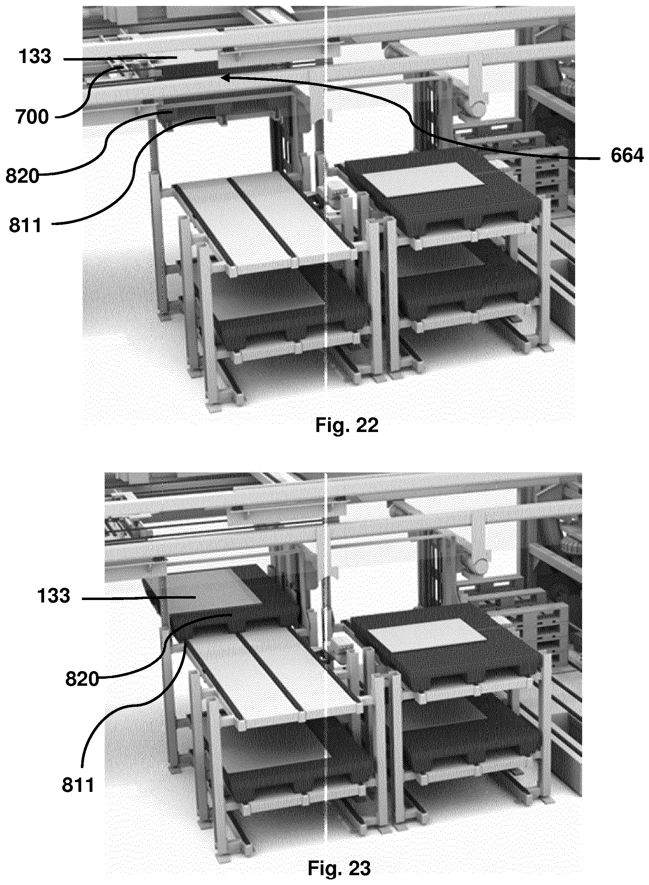

In figure 22 the pile sheet remover system 700 with one or more sheets 133 are positioned right above the sheet storage plate 820. This position is called the release position 664.

In figure 23 one or more sheets 133 have been released onto the sheet storage plate 820 and the first receiving lift 811 has moved down to the topmost storage position 840 of the first sheet storage magazine 831. The conveyor 400 may then move the sheet storage plate 820 onto the topmost storage position 840 of the first sheet storage magazine 831.

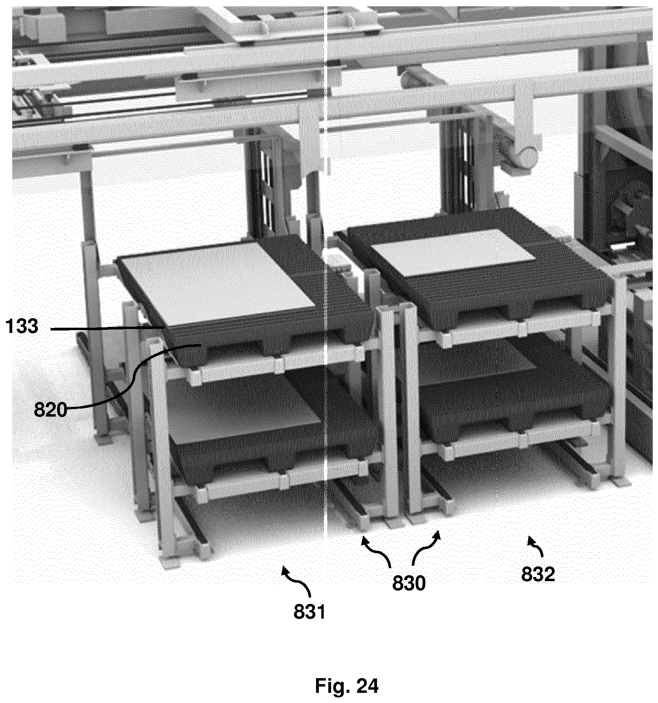

In figure 24 the sheet storage plate 820 is at rest at the topmost storage position 840 of the first sheet storage magazine 831.

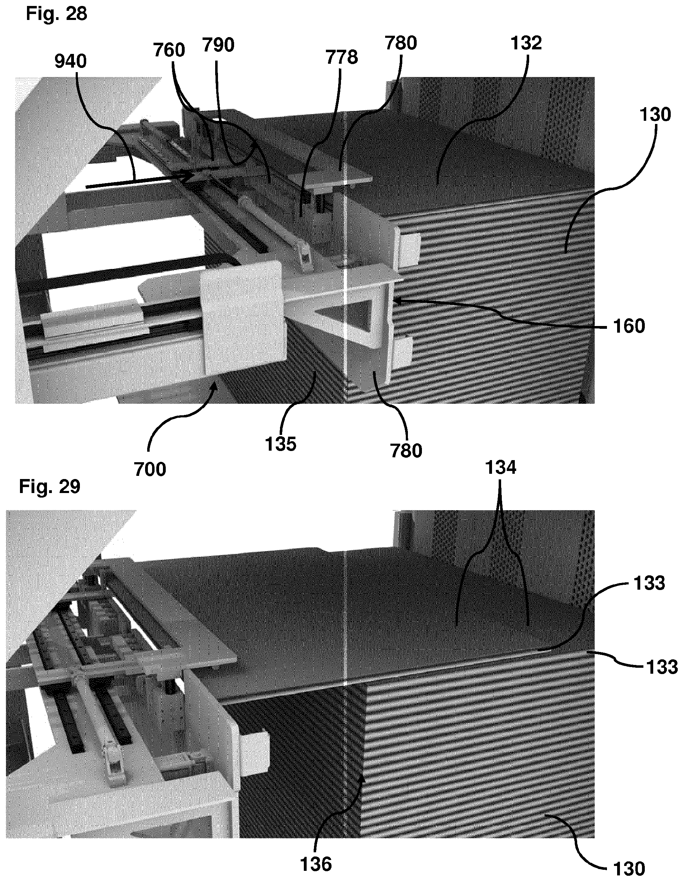

Figure 25 and 29 illustrate aspects of the pile sheet remover system 700.

Figure 25 illustrates a top view of the pile sheet remover system 700 having a sheet removing unit 710 with a support frame 720 supporting a moving frame 730.

The moving frame is configured for a linear movement in an attack direction 940 towards the side 135 and the first end 131 of the pile of sheets 130. The moving frame 730 has a side support plate 740 with a side support face 750 arranged to face and apply to the side 135 of the pile of sheets 130.

The pile sheet remover system 700 has a grab plate 780. The grab plate 780 is arranged with a grab face 790 essentially perpendicular to the side support face 750 and extending beyond the side support face 750 in the attack direction 940. The grab plate 780 is configured with a grab actuator 778 for a grab movement 920 towards the first end 131 of the pile of sheets 130.

Illustrated is a first attack knife 761 (not really visible) with a razor blade type shape. More visible is a second attack knife 762 here implemented as a pair of knives.

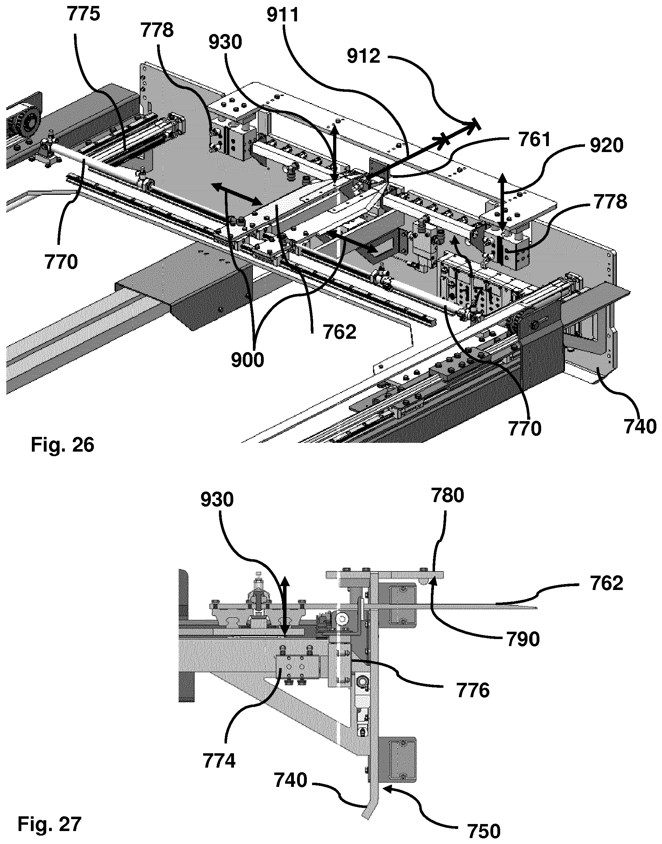

Figure 26 illustrates a close-up of the pile sheet remover system 100 front. Attack knives are shown as a first attack knife 761 and a pair of second attack knives 762.

In the figure the pile sheet remover system 700 has two second attack knives 762 arranged below the grab plate 780 to face the side 135 of the pile of sheets 130. The attack knives 760, 761, 762 are configured in an attack knives support 765 that is movable in an attack knives support guide 766 in the moving frame 730. The movement is caused by one or more attack actuators 774,775 (see figures 26 and 27) and for at least an attack movement.

In this case there is a first attack movement 911 of the first attack knife 761 caused by the first attack actuator 774. There is a second attack movement 912 in the attack direction 940 for insertion of the two second attack knives 762 caused by the second attack actuator 775.

In figure 26 the pile sheet remover system 700 has two second attack knives 762 configured with two transverse actuators 770 for a transverse movement 900. The transverse movement 900 is transverse to the line of the attack direction 940 and parallel to the sheet edges 136.

In figure 26 the pile sheet remover system 700 has the first attack knife 761 arranged with a lift actuator 776 (see figure 27) for a lift movement 930 transverse to the line of attack direction 940 and perpendicular to the direction of the sheet edges 136, i.e. the lift movement 930 is perpendicular to the line of attack direction 940 and the transverse direction 900.

Figure 27 illustrates a cross-section of the front end of a pile sheet remover system 700 from figures 25 and 26. The cross-section is in the center of the pile sheet remover system 700 in the transverse direction.

In particular the figure illustrates exemplary details of the configuration of the lift actuator 776 connected to the side support plate 740 and for activating the lift movement 930 of the first attack knife 761 (not shown).

The first attack actuator 774 is a pneumatic-type actuator for a possible distinct sharp movement. The lift actuator 776 is a pneumatic-type actuator for a possible distinct sharp movement. The second attack actuator 775 is an actuator for a continuous and slower linear motion, as compared to the distinct sharp movement.

Figure 28 is a close-up of the pile sheet remover system 700 engagement shown in figure 17.

In figure 28 the side support face 750 is connected to the side 135 of the pile of sheets 135 and the attack knives 760 have performed a first attack movement 911 in the attack direction followed by a lift movement and the second attack knives 762 performing a second attack movement 912.

The attack knives 760 are inserted between a pair of sheets 134 and the grab plate 780 makes a grab movement 920 between figure 28 and 29 and the pile sheet remover system 700 moves in the reverse attack direction 940.

In figure 29 a single sheet 133 is removed from the pile of sheets 130.

Adjusting the position of the pile of sheets 130 will regulate the position of the attack into the pile of sheets 130 and one or more sheets 133 may be removed from the pile of sheets 130.

| **Item** | **No** |
|---|---|
| Pile preparation unit | 100 |
| Infeed opening | 120 |
| Infeed direction | 125 |
| Pile of sheets | 130 |
| First end | 131 |
| Second end | 132 |
| Sheet | 133 |
| Pair of sheets | 134 |
| Side | 135 |
| Sheet edge | 136 |
| | |
| | |
| | |
| Pallet | 140 |
| First pallet | 141 |
| Second pallet | 142 |
| Set of pallets | 145 |
| Support side | 150 |
| Base side | 152 |
| Pallet receiving unit | 200 |
| Pallet receiving lift | 210 |
| | |
| | |
| | |
| Rotation unit | 300 |
| Rotating structure | 310 |
| Rotating axis | 320 |
| Conveyor | 400 |
| | |
| | |
| Lift unit | 500 |
| Lift structure | 510 |
| Lift plate | 520 |
| First lift plate | 521 |
| Second lift plate | 522 |
| | |
| | |
| Pallet change module | 600 |
| Pallet engagement means | 610 |
| First pallet engagement means | 611 |
| Second pallet engagement means | 612 |
| Pallet loading unit | 620 |
| Pallet loading arm | 622 |
| | |
| Portal | 630 |
| Pallet portal | 640 |
| First pallet portal | 641 |
| Second pallet portal | 642 |
| | |
| Extraction | 650 |
| Insertion | 652 |
| Extraction position | 660 |
| Delivery position | 662 |
| Release position | 664 |
| | |
| Pile sheet remover system (PSR) | 700 |
| Sheet removing unit | 710 |
| Support frame | 720 |
| Moving frame | 730 |
| Side support plate | 740 |
| Side support face | 750 |
| Attack knives | 760 |
| First Attack knives | 761 |
| Second Attack knives | 762 |
| | |
| Attack knives support | 765 |
| Attack knives support guide | 766 |
| Transverse actuators | 770 |
| | |
| First attack actuator | 774 |
| Second attack actuator | 775 |
| Lift Actuators | 776 |
| Grab actuator | 778 |
| Grab plate | 780 |
| Grab face | 790 |
| | |
| Sheet storage unit | 800 |
| Sheet receiving lift | 810 |
| First sheet receiving lift | 811 |
| Second sheet receiving lift | 812 |
| Sheet storage plate | 820 |
| Sheet storage magazine | 830 |
| First sheet storage magazine | 831 |
| Second sheet storage magazine | 832 |
| Storage position | 840 |
| | |
| | |
| Transverse movement | 900 |
| First attack movement | 911 |
| Second attack movement | 912 |
| Grab movement | 920 |
| Lift movement | 930 |
| Attack direction | 940 |

## Claims

1. A pile preparation unit (100) for changing a first pallet (141) with a second pallet (142), the pallets (141, 142) for supporting a pile of sheets (130) with a first end (131) and a second end (132) where the first pallet (141) has a support side (150) supporting the pile of sheets (130) at the first end (131) and an opposite base side (152), the pile preparation unit (100) comprising:
- a rotation unit (300) configured with an infeed opening (120) for receiving the first pallet (141) with a pile of sheets (130), the rotation unit (300) is configured with a rotating structure (310) to rotate a lift unit (500) about a rotational axis (320),
- a pallet change module (600) comprising a pallet portal (640) with movable pallet engagement means (610) for engaging with the first and/or second pallet (141, 142) for extraction (650) from and/or insertion (652) into the portal (630) formed in a upper section of the rotation unit (300) when a lift plate (520) is in the lower section of the rotation unit (300), the pile preparation unit further comprising a pallet loading unit (620) arranged on the opposite side of the pallet change module (600) and with a pallet loading arm (622) fixed to the rotation unit (300), the pallet loading arm (622) configured to engage with and support the second pallet (142) during rotation of the rotating structure (310) and configured to release the second pallet (142) on the second pallet engagement means (612), wherein the pallet change module (600) comprises
- a first pallet portal (641) with movable first pallet engagement means (611) arranged to extend to an extraction position (660) in the rotation unit (300); **characterized in that** the pallet change module (600) further comprises
- a second pallet portal (642) with movable second pallet engagement means (612) arranged to extend to a delivery position (662) in the rotation unit (300) where the first and second pallet portal (641,642) are vertically separated; and wherein
- the lift unit (500) is configured to move and position the lift plate (520) for the required first or second ends (131,132) of the pile of sheets (130) to be positioned at the respective extraction position (660) and delivery position (662).

2. The pile preparation unit (100) according to claim 1, wherein the pallet change module (600) is arranged on the side of the rotation unit (300) and to extend the pallet engagement means (610), the first (611) or second (612) or both pallet engagement means (610) into the rotation unit (300) from a transverse direction to the rotational axis (320).

3. The pile preparation unit (100) according to claim 1 or 2, wherein the pallet change module (600) is operatively connected to a pallet receiving unit (200) arranged below the pallet portal (640) and with a pallet receiving lift (210) operatively communicating the movable pallet engagement means (610) for a release of an extracted pallet (140) onto a set of pallets (145).

4. The pile preparation unit (100) according to any preceding claim, wherein the pallet change module (600) is operatively connected to a pile sheet remover system (700) configured to remove sheets from a pile of sheets (130) from the rotating unit (300).

5. The pile preparation unit (100) according to claim 4, wherein the pile sheet remover system (700) is arranged on the pallet portal (640) with movable pallet engagement means (610) arranged to extend to a delivery position (662) in the rotation unit (300), and with the pile sheet remover system (700) arranged with an additional movement to attack a pile of sheets in the rotation unit (130).

6. The pile preparation unit (100) according to claims 4 or 5, wherein the pallet change module (600) is operatively connected to a sheet storage unit (800) operatively communicating with the pile sheet remover system (700) arranged on the pallet portal (640), where the sheet storage unit (800) is arranged below the pallet portal (640) and operatively communicating one or more sheets (133) from a release position (664) in the pallet portal (640) to a sheet storage plate (820).

7. The pile preparation unit (100) according to claim 6, wherein the sheet storage unit (820) comprises a sheet storage magazine (830) with multiple sheet storage plates (820) at distinct storage positions (840), and where a sheet receiving lift (810) is configured to communicate with sheet storage plates (820) between the distinct storage positions (840) and a release position (664) of the pile sheet remover system (700).

8. The pile preparation unit (100) according to claim 7, wherein the sheet storage unit (800) comprises multiple sheet receiving lifts (810) distributed along and optionally below the pallet portal (640).

9. The pile preparation unit (100) according to any of claim 6 to 8, comprising a first sheet receiving lift (811) configured to communicate with a pallet (140) chosen from a first sheet storage magazine (831) and a second sheet receiving lift (812) configured to communicate with a pallet (140) chosen from a second sheet storage magazine (832), where the first (811) and second sheet receiving lifts (812) are located under the pallet portal (640) and the first (831) and second sheet magazines (832) are located adjacent to the respective first (811) and second (812) sheet receiving lifts (810).

## Patentansprüche

1. Einheit (100) zur Herstellung eines Stapels zum Austauschen einer ersten Palette (141) gegen eine zweite Palette (142), wobei die Paletten (141, 142) zum Stützen eines Stapels von Blättern (130) mit einem ersten Ende (131) und einem zweiten Ende (132) vorgesehen sind, wobei die erste Palette (141) eine Stützseite (150), die den Stapel von Blättern (130) an dem ersten Ende (131) stützt, und eine gegenüberliegende Bodenseite (152) aufweist, wobei die Einheit (100) zur Herstellung eines Stapels Folgendes umfasst:
eine Rotationseinheit (300), die mit einer Einfüllöffnung (120) zum Empfangen der ersten Palette (141) mit einem Stapel von Blättern (130) konfiguriert ist, wobei die Rotationseinheit (300) so mit einer Rotationsstruktur (310) konfiguriert ist, dass sie eine Hubeinheit (500) um eine Rotationsachse (320) rotiert,
ein Palettenaustauschmodul (600), umfassend ein Palettenportal (640) mit einem beweglichen Paletteneingreifmittel (610) zum Eingreifen in die erste und/oder zweite Palette (141, 142) zum Entnehmen (650) aus dem und/oder Einsetzen (652) in das Portal (630), das in einem oberen Bereich der Rotationseinheit (300) gebildet ist, wenn sich eine Hubplatte (520) in dem unteren Bereich der Rotationseinheit (300) befindet, wobei die Einheit zur Herstellung eines Stapels ferner eine Palettenladeeinheit (620) umfasst, die auf der gegenüberliegenden Seite des Palettenaustauschmoduls (600) angeordnet ist und einen an der Rotationseinheit (300) befestigten Palettenladearm (622) aufweist, wobei der Palettenladearm (622) so konfiguriert ist, dass er während der Rotation der Rotationsstruktur (310) in die zweite Palette (142) eingreift und sie stützt, und so konfiguriert ist, dass er die zweite Palette (142) an dem zweiten Paletteneingreifmittel (612) freigibt, wobei das Palettenaustauschmodul (600) Folgendes umfasst:
ein erstes Palettenportal (641) mit beweglichem ersten Paletteneingreifmittel (611), das so angeordnet ist, dass es sich zu einer Entnahmeposition (660) in der Rotationseinheit (300) ausdehnt; **dadurch gekennzeichnet, dass** das Palettenaustauschmodul (600) ferner Folgendes umfasst:
ein zweites Palettenportal (642) mit beweglichem zweiten Paletteneingreifmittel (612), das so angeordnet ist, dass es sich zu einer Ausgabeposition (662) in der Rotationseinheit (300) ausdehnt, wo das erste und das zweite Palettenportal (641, 642) vertikal voneinander getrennt sind; und wobei
die Hubeinheit (500) so konfiguriert ist, dass sie die Hubplatte (520) für das benötigte erste oder zweite Ende (131, 132) des Stapels von Blättern (130) bewegt und positioniert, damit sie an der jeweiligen Entnahmeposition (660) und Ausgabeposition (662) positioniert werden.

2. Einheit (100) zur Herstellung eines Stapels nach Anspruch 1, wobei das Palettenaustauschmodul (600) an der Seite der Rotationseinheit (300) angeordnet ist und um das Paletteneingreifmittel (610), das erste (611) oder das zweite (612) oder beide Paletteneingreifmittel (610) in die Rotationseinheit (300) aus einer zu der Rotationsachse (320) quer verlaufenden Richtung hinein auszudehnen.

3. Einheit (100) zur Herstellung eines Stapels nach Anspruch 1 oder 2, wobei das Palettenaustauschmodul (600) mit einer unterhalb des Palettenportals (640) angeordneten Palettenaufnahmeeinheit (200) und mit einem Palettenaufnahmeheber (210), der das bewegliche Paletteneingreifmittel (610) zum Freigeben einer entnommenen Palette (140) auf einen Satz Paletten (145) betriebsmäßig kommuniziert, betriebsmäßig verbunden ist.

4. Einheit (100) zur Herstellung eines Stapels nach einem der vorhergehenden Ansprüche, wobei das Palettenaustauschmodul (600) mit einem Stapelblattentfernungssystem (700) betrieblich verbunden ist, das so konfiguriert ist, dass es Blätter von einem Stapel Blätter (130) von der Rotationseinheit (300) entfernt.

5. Einheit (100) zur Herstellung eines Stapels nach Anspruch 4, wobei das Stapelblattentfernungssystem (700) auf dem Palettenportal (640) mit einem beweglichen Paletteneingreifmittel (610), das so angeordnet ist, dass es sich in der Rotationseinheit (300) bis zu einer Ausgabeposition (662) ausdehnt, und mit dem Stapelblattentfernungssystem (700), das mit einer zusätzlichen Bewegung angeordnet ist, um einen Stapel Blätter in der Rotationseinheit (130) zu bearbeiten, angeordnet ist.

6. Einheit (100) zur Herstellung eines Stapels nach Anspruch 4 oder 5, wobei das Palettenaustauschmodul (600) betriebsmäßig mit einer Blattspeichereinheit (800) verbunden ist, die mit dem auf dem Palettenportal (640) angeordneten Stapelblattentfernungssystem (700) betriebsmäßig kommuniziert, wobei die Blattspeichereinheit (800) unterhalb des Palettenportals (640) angeordnet ist und betriebsmäßig ein oder mehrere Blätter (133) von einer Freigabeposition (664) in dem Palettenportal (640) auf eine Blattspeicherplatte (820) kommuniziert.

7. Einheit (100) zur Herstellung eines Stapels nach Anspruch 6, wobei die Blattspeichereinheit (820) ein Blattspeichermagazin (830) mit mehreren Blattspeicherplatten (820) an verschiedenen Speicherpositionen (840) umfasst und wobei ein Blattaufnahmeheber (810) so konfiguriert ist, dass er mit den Blattspeicherplatten (820) zwischen den verschiedenen Speicherpositionen (840) und einer Freigabeposition (664) des Stapelblattentfernungssystems (700) kommuniziert.

8. Einheit (100) zur Herstellung eines Stapels nach Anspruch 7, wobei die Blattspeichereinheit (800) mehrere Blattaufnahmeheber (810) umfasst, die entlang und optional unterhalb des Palettenportals (640) verteilt sind.

9. Einheit (100) zur Herstellung eines Stapels nach einem der Ansprüche 6 bis 8, umfassend einen ersten Blattaufnahmeheber (811), der so konfiguriert ist, dass er mit einer aus einem ersten Blattspeichermagazin (831) ausgewählten Palette (140) kommuniziert, und einen zweiten Blattaufnahmeheber (812), der so konfiguriert ist, dass er mit einer aus einem zweiten Blattspeichermagazin (832) ausgewählten Palette (140) kommuniziert, wobei sich der erste (811) und der zweite Blattaufnahmeheber (812) unter dem Palettenportal (640) befinden und sich das erste (831) und das zweite Blattspeichermagazin (832) benachbart zu dem jeweiligen ersten (811) bzw. zweiten (812) Blattaufnahmeheber (810) befinden.

## Revendications

1. Unité de préparation de piles (100) permettant de changer un premier support de palette (141) pour un second support de palette (142), les palettes (141, 142) étant conçues pour supporter une pile de feuilles (130) comprenant une première extrémité (131) et une seconde extrémité (132), la première palette (141) ayant un côté de support (150) supportant la pile de feuilles (130) à la première extrémité (131) et un côté opposé (152), l'unité de préparation de piles (100) comprenant :
- une unité de rotation (300) conçue avec une ouverture d'alimentation (120) pour recevoir la première palette (141) avec une pile de feuilles (130), l'unité de rotation (300) étant configurée avec une structure rotative (310) pour faire tourner une unité de levage (500) autour d'un axe de rotation (320),
- un module de changement de palette (600) comprenant un portail de palette (640) doté d'un dispositif d'engagement de palette mobile (610) pour engagement avec la première et/ou la seconde palette (141, 142) permettant l'extraction (650) et/ou l'insertion (652) dans le portail (630) formé dans la partie supérieure de l'unité de rotation (300), lorsqu'une plaque de levage (520) se trouve dans la partie inférieure de l'unité de rotation (300). L'unité de préparation de piles comprend en outre une unité de chargement de palette (620) disposée du côté opposé au module de changement de palette (600) et dotée d'un bras de chargement de palette (622) fixé à l'unité de rotation (300). Ce bras de chargement (622) est configuré pour s'engager avec la seconde palette (142) et la supporter pendant la rotation de la structure rotative (310), puis pour libérer la seconde palette (142) sur le second dispositif d'engagement de palette (612). Le module de changement de palette (600) comprenant
- un premier portique de palette (641) comprenant des premiers moyens de mise en prise de palette mobiles (611) agencés pour s'étendre jusqu'à une position d'extraction (660) dans l'unité de rotation (300) ; **caractérisé en ce que** le module de changement de palette (600) comprend en outre
- un second portique de palette (642) comprenant des seconds moyens de mise en prise de palette mobiles (612) agencés pour s'étendre jusqu'à une position de distribution (662) dans l'unité de rotation (300) où le premier et le second portique de palette (641, 642) sont séparés verticalement ; et dans lequel
- l'unité de levage (500) est configurée pour déplacer et positionner la plaque de levage (520) pour que la première et la seconde extrémité de palette (131, 132) de la pile de feuilles (130) soit positionnées au niveau des positions d'extraction (660) et positions de distribution (662) respectives.

2. Unité de préparation de piles (100) selon la revendication 1, dans laquelle le module de changement de palette (600) est agencé sur un côté de l'unité de rotation (300) et pour étendre les moyens de mise en prise de palette (610), les premiers (611) ou les seconds (612) ou à la fois les premiers et seconds moyens de mise en prise de palette (610) dans l'unité de rotation (300) à partir d'une direction transversale par rapport à l'axe de rotation (320).

3. Unité de préparation de piles (100) selon la revendication 1 ou 2, dans laquelle le module de changement de palette (600) est relié fonctionnellement à une unité de réception de palettes (200) disposée sous le portail de palettes (640) et avec un élévateur de réception de palettes (210) communiquant fonctionnellement avec les moyens d'engagement de palettes mobiles (610) pour la libération d'une palette extraite (140) sur un ensemble de palettes (145).

4. Unité de préparation de pile (100) selon l'une quelconque des revendications précédentes, dans laquelle le module de changement de palette (600) est relié fonctionnellement à un système de retrait de feuilles de pile (700) configuré pour retirer les feuilles d'une pile de feuilles (130) de l'unité rotative (300).

5. Unité de préparation de pile (100) selon la revendication 4, dans laquelle le système d'enlèvement de feuilles de pile (700) est disposé sur le portail de palette (640) avec des moyens d'engagement de palette mobiles (610) disposés pour s'étendre jusqu'à une position de livraison (662) dans l'unité de rotation (300), et avec le système d'enlèvement de feuilles de pile (700) disposé avec un mouvement supplémentaire pour attaquer une pile de feuilles dans l'unité de rotation (130).

6. Unité de préparation de pile (100) selon les revendications 4 ou 5, dans laquelle le module de changement de palette (600) est connecté fonctionnellement avec une unité de stockage de feuilles (800) communiquant fonctionnellement avec le système de retrait de feuilles de pile (700) disposé sur le portail de palette (640), où l'unité de stockage de feuilles (800) est disposée sous le portail de palette (640) et communique fonctionnellement avec une ou plusieurs feuilles (133) depuis une position de libération (664) dans le portail de palette (640) vers une plaque de stockage de feuilles (820).

7. Unité de préparation de piles (100) selon la revendication 6, dans laquelle l'unité de stockage de feuilles (820) comprend un magasin de stockage de feuilles (830) avec plusieurs plaques de stockage de feuilles (820) à des positions de stockage distinctes (840), et où un élévateur de réception de feuilles (810) est configuré pour communiquer avec les plaques de stockage de feuilles (820) entre les positions de stockage distinctes (840) et une position de libération (664) du système de retrait de feuilles de piles (700).

8. Unité de préparation de piles (100) selon la revendication 7, dans laquelle l'unité de stockage de feuilles (800) comprend plusieurs élévateurs de réception de feuilles (810) répartis le long et éventuellement en dessous du portail de palette (640).

9. Unité de préparation de piles (100) selon l'une quelconque des revendications 6 à 8, comprenant un premier élévateur de réception de feuilles (811) configuré pour communiquer avec une palette (140) choisie dans un premier magasin de stockage de feuilles (831) et un second élévateur de réception de feuilles (812) configuré pour communiquer avec une palette (140) choisie dans un second magasin de stockage de feuilles (832), où le premier (811) et le second élévateur de réception de feuilles (812) sont situés sous le portail de palettes (640) et le premier (831) et le second magasin de feuilles (832) sont situés à proximité du premier (811) et du second (812) élévateur de réception de feuilles respectifs (810).
